# EUROPÄISCHE PATENTSCHRIFT

(11) **EP 1 581 364 B1**
(45) Veröffentlichungstag und Bekanntmachung des Hinweises auf die Patenterteilung: **14.03.2007**
(21) Anmeldenummer: 04700094.8
(22) Anmeldetag: 03.01.2004
(51) Int. Cl.: B24B 13/005, B24B 9/14, G02C 13/00

(54) **VERFAHREN ZUR PARALLAXEFREIEN ZENTRIERUNG EINES OPTISCHEN ELEMENTES**
METHOD FOR THE PARALLAX-FREE CENTRING OF AN OPTICAL ELEMENT
PROCEDE DE CENTRAGE SANS PARALLAXE D'UN ELEMENT OPTIQUE

(30) Priorität: 11.01.2003 DE 10300777
(43) Veröffentlichungstag der Anmeldung: 05.10.2005
(73) Patentinhaber: Carl Zeiss Vision GmbH, 73430 Aalen (DE)
(72) Erfinder: ZAISER, Michael, 73560 Böbingen (DE)
(74) Vertreter: Lorenz, Werner
(86) Internationale Anmeldenummer: PCT/EP2004/000012
(87) Internationale Veröffentlichungsnummer: WO 2004/062848

(56) Entgegenhaltungen:
- EP-A- 0 865 871
- WO-A-20/04015482
- DE-A- 3 829 488
- DE-A- 19 804 542

## Beschreibung

Die Erfindung betrifft ein Verfahren zur parallaxefreien Zentrierung eines Halbfabrikates eines späteren Brillenglases, auf einer Halterung einer Zentrier- oder Aufnahmeeinrichtung, wobei das Halbfabrikat mit Gravurzeichen versehen wird.

Aus dem allgemeinen Stand der Technik ist bereits bekannt, dass Halbfabrikate von nicht individuellen Gleitsichtgläsern in einem Gießprozess hergestellt werden. Bei dem Gießprozess werden auch Gravurzeichen in die Frontseite des Halbfabrikates eingebracht. Die Gravurzeichen ermöglichen eine Orientierung des Halbfabrikates, welche aufgrund der Freiformfläche des späteren Gleitsichtglases notwendig wird. Nach dem Gießprozess und eventuell Oberflächenbehandlungen werden die Halbfabrikate mit einem Stempelbild versehen und an einer Aufnahmeeinrichtung bzw. eine Blockeinrichtung ausgerichtet. Beim Blockprozess wird das Halbfabrikat mit einer Aufnahme bzw. einem Blockstück über Blockmaterial verbunden, so dass das Halbfabrikat in den nachfolgenden Bearbeitungsschritten in Bearbeitungsmaschinen für die Rückflächenbearbeitung aufgenommen werden kann.

Bei individuellen Gleitsichtgläsern wird das Halbfabrikat aus einem Vorfabrikat in einem Dreh- oder Fräsprozess und einem anschließenden Polierprozess hergestellt. Die Gravurzeichen werden hier über einen separaten Prozess, beispielsweise Lasern, Gravieren oder ähnliche Verfahren, auf die fertige Frontfläche aufgebracht.

Aus der DE 38 29 488 C2 ist eine Vorrichtung und ein Verfahren zum Zentrieren von Brillengläsern bekannt, wobei ein Brillenrohglas auf einer Auflage ausgerichtet wird. Das durch eine Videokamera oder einen Bildabtaster erfasste Bild des Rohglases wird auf einem Bildschirm eines Computers gegeben und von der in dem Computer eingegebenen Kontur des Fertigglases überlagert. Ein Oberschlitten besitzt auf seiner Oberseite ein Koordinatenkreuz und in x-Richtung des Oberschlittens gesehen drei Kennzeichnungspunkte. Die gleichen Kennzeichnungspunkte weist das Rohglas auf. Die Kennzeichnungspunkte des Rohglases und der Auflage des Oberschlittens müssen sich genau überdecken, damit das Brillenglas genau zentriert ist. Das Verfahren zum Zentrieren und Aufblocken eines Brillenglases wird hier mit Hilfe eines Stempelbildes auf dem Brillenglas durchgeführt. Ebenfalls dient dieses Verfahren nicht der Zentrierung von Halbfabrikaten.

In der DE 198 04 542 A1 ist eine CNC-gesteuerte Brillenglasbearbeitungsmaschine und ein Verfahren zum Bearbeiten von Brillengläsern beschrieben. Dabei werden Rohgläser in die Maschine eingesetzt, wonach das Brillenglas entsprechend den Anforderungen des Brillenträgers, für den die Brille vorgesehen ist, bearbeitet wird.

Aus der EP 0 865 871 A ist ebenfalls ein Prozess zur Herstellung von Brillengläsern bekannt.

Die DE 38 29 488 A bezieht sich auf ein Einschleifen eines Rohglases, wobei die Rohglasauflage auf einem Kreuzschlitten angeordnet und über oder unter ihr eine Videokamera angeordnet ist, die mit dem Bildschirm eines Computers verbunden ist, der seinerseits mit dem Kreuzschlitten in Verbindung steht.

Demgemäß ist es Aufgabe der Erfindung, ein Verfahren zu schaffen, welches eine Vereinfachung der Prozessschritte ermöglicht und das Zentrieren und Ausrichten an einer Zentrier- und Aufnahmeeinrichtung vereinfacht.

Erfindungsgemäß wird diese Aufgabe dadurch gelöst, dass die Zentrierung des optischen Elementes anhand der Gravurzeichen erfolgt.

Anhand der mit dem Halbfabrikat/Brillenglas versehenen Gravurzeichen kann eine einfache und genaue Ausrichtung bzw. Zentrierung an der Aufnahmeeinrichtung erfolgen. Somit entfällt der Prozessschritt "Stempeln" des Halbfabrikates.

Vorteilhafte Ausgestaltungen und Weiterbildungen der Erfindung ergeben sich aus den weiteren Unteransprüchen und dem nachfolgend anhand der Zeichnung prinzipmäßig beschriebenen Ausführungsbeispiel.

Es zeigt:
- Figur 1: eine prinzipmäßige Darstellung eines Brillenglases/Halbfabrikates nach dem Stand der Technik; und
- Figur 2: eine prinzipmäßige Darstellung eines erfindungsgemäßen Verfahrens anhand eines Blockschaltbildes.

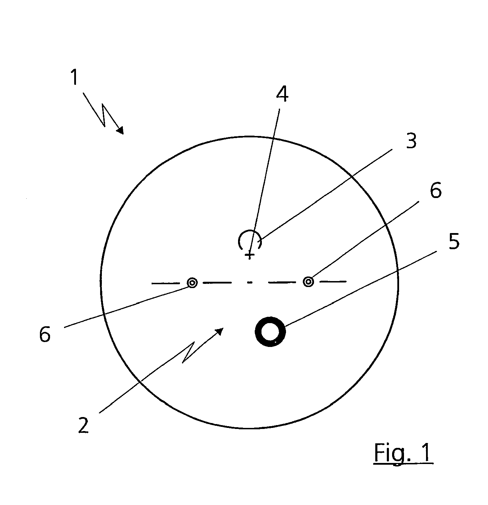

Figur 1 zeigt als Stand der Technik ein Halbfabrikat 1, welches mit einem Stempelbild 2 versehen ist. Das Stempelbild 2 ist auch jenes Stempelbild, welches ein Augenoptiker für die Kontrolle der Fernwirkung und der Nahwirkung benötigt. Dieses Stempelbild 2 besteht laut Stand der Technik aus einem Messkreis für die Ferne 3, wobei über ein Zentrierkreuz 4 der Augenoptiker die Fernwirkung nachkontrollieren kann. In einem Nahmesskreis 5 kann der Augenoptiker nach dem bekannten konkavseitigen Messverfahren den erforderlichen Nahmesswert nachmessen. Nach Entfernen des Stempelbildes 2 kann der Augenoptiker mit Hilfe von Glasgravuren 6, sogenannte Permanentgravuren, und einer Messschablone alle Bezugs- und Messpunkte rekonstruieren. Die Permanentgravuren 6 kennzeichnen zudem den Brillenglastyp, wobei unterhalb eines Gravurpunktes jeweils eine Brillenglaskennzeichnung, wie beispielsweise T66 für die Brechzahl 1,665, eingraviert wird. Unter dem zweiten Gravurpunkt 6 findet sich im allgemeinen die Addition, welche ebenfalls eingraviert wird. Je nach Herstellungsfirma befinden sich unter dem nasalen und temporalen Gravurpunkten unterschiedliche Angaben.

Für das nun hier erfindungsgemäße Verfahren wird das Stempelbild 2, wobei es sich hier nicht um die Randbearbeitung von schon auf beiden Seiten mit optischen Flächen versehenen Brillengläsern handelt, wie sie beim Augenoptiker zur Weiterverarbeitung eintreffen, nicht benötigt.

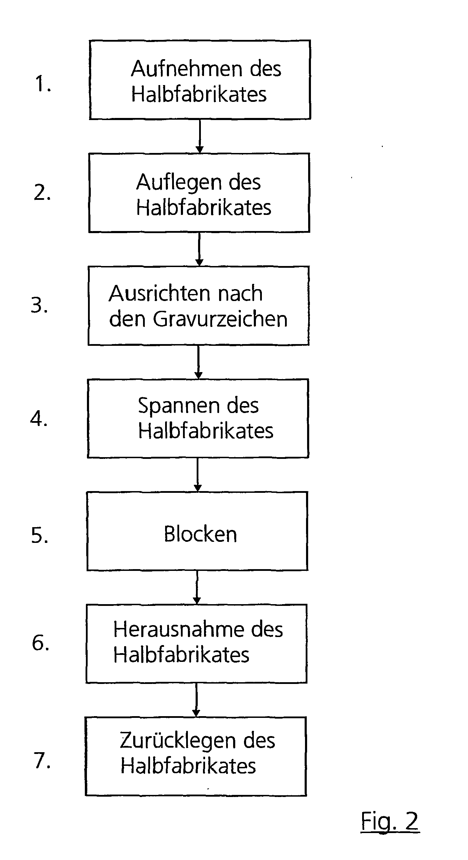

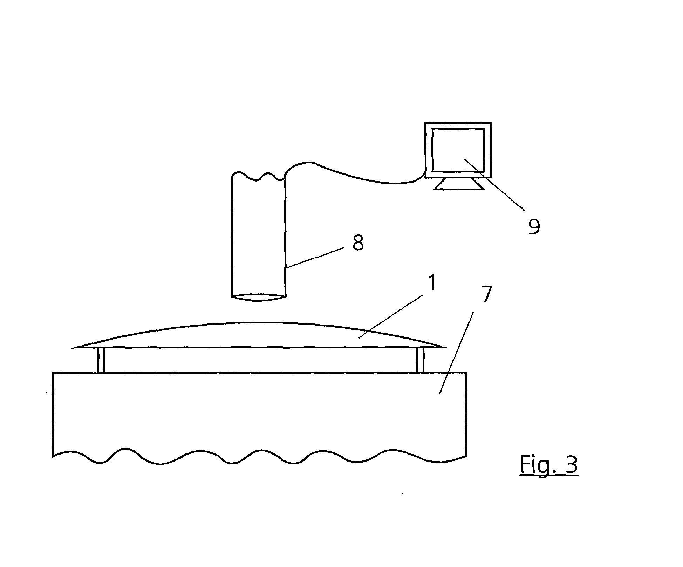

In Figur 2 ist das erfindungsgemäße Verfahren in einer Art Blockschaltbild kurz umrissen. Als erstes wird das Halbfabrikat 1 aus einem Transportbehälter, wobei mehrere Halbfabrikate in dem Transportbehälter gelagert sein können, manuell von Hand aufgenommen. Hierbei ist das Halbfabrikat 1 bereits lackiert oder mit einer Schutzfolie, welche insbesondere für Kunststoffgläser zur Vorbeugung von Beschädigungen benötigt werden, versehen. Im zweiten Schritt wird das Halbfabrikat 1 auf eine Zentrier- und Aufnahmeeinrichtung 7, welche hier in Figur 3 nicht näher dargestellt ist, aufgelegt. Nun erfolgt die Ausrichtung des Halbfabrikates 1 anhand der Gravurzeichen 6. Dazu wird der Einsatz einer entsprechenden Bildverarbeitungstechnik notwendig, welche die Gravurzeichen 6 für den Bediener sichtbar macht. Hierfür kann eine entsprechend hoch auflösende Kamera 8 verwendet werden, welche die Position des Halbfabrikates 1 auf der Zentrier- und Aufnahmeeinrichtung 7 aufnimmt. Weiterhin kann eine Beleuchtungstechnik in Verbindung mit der hochauflösenden Kamera 8 verwendet werden. Ob eine Beleuchtungstechnik notwendig ist, hängt von den Umgebungsbedingungen ab. Hierbei spielen die Lichtverhältnisse am Produktionsort wie auch die Bildverarbeitung eine große Rolle. Es wäre auch möglich, falls Kamerasysteme vorhanden sind, die unempfindlich gegenüber Umgebungsbeleuchtung sind, dass keine Beleuchtungstechniken notwendig werden. Für die Beleuchtungstechnik können beispielsweise Lampen, herkömmliche Strahler oder auch herkömmliche Lichtquellen verwendet werden. Dies kann notwendig sein, um einen gewissen Kontrast für das entsprechende Kamerasystem herzustellen, wobei die Vertiefungen der Gravurzeichen 6 ein Schattenbild ergeben sollen.

Das über die Kamera 8 erzeugte Ausgangssignal kann mit einer entsprechenden Software ausgewertet und über einen Bildschirm 9 dem Bediener angezeigt werden. Weiterhin kann auf dem Bildschirm 9 die Solllage der Gravurzeichen 6 vorgegeben werden. Ist das Halbfabrikat 1 auf der Zentrier- und Aufnahmeeinrichtung 7 aufgelegt, so kann mit Hilfe von Eingabebefehlen auf dem Bildschirm 9 die Solllage der Gravurzeichen 6 eingelesen oder eingeblendet werden. Der Bediener dreht bzw. positioniert das Halbfabrikat 1 so lange, bis die Gravurzeichen 6 des Halbfabrikates 1 innerhalb der Solllage zu liegen kommen. Anschließend kann der Blockprozess ausgelöst werden, wobei das Halbfabrikat 1 in der Regel zuerst über einen Spannmechanismus gespannt wird, bevor der eigentliche Blockprozess beginnen kann.

Über eine intelligente Auswertesoftware kann der Start des Blockprozesses auch mit der Solllage verbunden werden, so dass der Blockprozess erst dann gestartet werden kann, wenn das Halbfabrikat 1 in korrekter Glasposition, also innerhalb der zulässigen Solllage, sich befindet.

Auf dem Bildschirm 9 kann die aktuelle Glasposition in x/y Koordinaten als Abweichung zur Sollposition dargestellt werden. Dies spricht für eine einfache Bedienung durch eine WINDOWS-Oberfläche. Die korrekte Glasposition kann durch Signalelemente signalisiert werden.

Wurde der Blockprozess ausgelöst, kann nun das Halbfabrikat 1 aus der Zentrier- und Aufnahmevorrichtung 7 genommen und in den Transportbehälter zurückgelegt werden.

Es ist natürlich auch möglich, die Prozessschritte eins bis sieben automatisiert ablaufen zu lassen, was bedeutet, dass das Handling vom Halbfabrikat 1, so wie die Entscheidung über korrekte Blockposition, von einem Handlingsystem bzw. einer Steuerung, beispielsweise durch einen Roboter, übernommen werden könnte.

Grundsätzlich könnte auch, neben der bereits erwähnten Möglichkeit, für die Ausrichtung an der Zentrier- und Aufnahmeeinrichtung 7 eine erste Aufnahme, welche für die Frontflächenbearbeitung notwendig ist, verwendet werden. Da das Halbfabrikat 1 schon eine definierte Lage auf der ersten Aufnahme aufweist, kann nun diese Position so lange beibehalten werden, bis eine zweite Aufnahme positionsgenau an das Halbfabrikat 1 angebracht werden kann. Eine detaillierte Beschreibung ist aus der älteren DE 102 29 150.0 bekannt.

Somit kann das Ausrichten des Halbfabrikates 1 auf der Zentrier- und Aufnahmeeinrichtung anhand der Gravurzeichen 6 erfolgen, welche immer, insbesondere bei Gleitsichtgläsern, in das Halbfabrikat 1 eingebracht sind. Dadurch kann der Prozessschritt "Stempeln" entfallen und das Verfahren erzeugt somit eine höhere Produktivität und Wirtschaftlichkeit.

## Patentansprüche

1. Verfahren zur parallaxefreien Zentrierung eines Halbfabrikates eines späteren Brillenglases auf einer Halterung einer Zentrier- oder Aufnahmeeinrichtung, wobei das Halbfabrikat mit Gravurzeichen versehen wird, **dadurch gekennzeichnet, dass** die Zentrierung des Halbfabrikats (1) anhand der Gravurzeichen (6) erfolgt.

2. Verfahren nach Anspruch 1, **dadurch gekennzeichnet, dass** zum Sichtbarwerden der Gravurzeichen (6) eine Bildverarbeitungstechnik verwendet wird.

3. Verfahren nach Anspruch 1, **dadurch gekennzeichnet, dass** auf einem Monitor die Solllage der Gravurzeichen (6) vorgegeben wird.

4. Verfahren nach Anspruch 1, **dadurch gekennzeichnet, dass** bei exakter Positionierung der Gravurzeichen (6) innerhalb der Solllage ein Aufnahme- und/oder Blockprozess ausgelöst wird.

5. Verfahren nach einem der Ansprüche 1 bis 4 mit einer Zentrier- oder Aufnahmeeinrichtung, **dadurch gekennzeichnet, dass** zur Aufnahme der Gravurzeichen (6) eine hochauflösende Kamera (8) vorgesehen wird, wobei ein Ausgangssignal über ein Softwareprogramm ausgewertet wird.

## Claims

1. Method for the parallax-free centring of a semifinished product of a future spectacle lens on a holder of a centring or mounting device, the semifinished product being provided with engravings,
**characterised in that** the semifinished product (1) is centred with the aid of the engravings (6).

2. Method according to Claim 1, **characterised in that** an image processing technique is used in order to visualise the engravings (6).

3. Method according to Claim 1, **characterised in that** the setpoint position of the engravings (6) is provided on a monitor.

4. Method according to Claim 1, **characterised in that** a mounting and/or blocking process is initiated when the engravings (6) are positioned exactly within the setpoint position.

5. Method according to one of Claims 1 to 4 with a centring or mounting device, **characterised in that** a high-resolution camera (8) is provided for recording the engravings (6), an output signal being evaluated via a software program.

## Revendications

1. Procédé pour le centrage sans parallaxe d'un semi-produit d'un futur verre de lunette sur un support d'un dispositif de centrage et d'enregistrement dans lequel le semi-produit est pourvu de signes gravés, **caractérisé en ce que** le centrage du semi-produit (1) s'effectue au moyen des signes gravés (6).

2. Procédé selon la revendication 1, **caractérisé en ce que**, pour rendre les signes gravés (6) visibles, on utilise une technique de traitement d'images.

3. Procédé selon la revendication 1, **caractérisé en ce que** la position de consigne des signes gravés (6) est prédéfinie sur un moniteur.

4. Procédé selon la revendication 1, **caractérisé en ce que**, lorsque les signes gravés (6) sont exactement positionnés dans les limites de la position de consigne, un processus d'enregistrement et/ou de blocage est déclenché.

5. Procédé selon l'une des revendications 1 à 4, comportant un dispositif de centrage ou d'enregistrement, **caractérisé en ce que**, pour l'enregistrement des signes gravés (6), on a prévu un appareil photographique à haute résolution (8), un signal de sortie étant exploité par l'intermédiaire d'un logiciel.
